# EUROPÄISCHE PATENTSCHRIFT

(11) **EP 1 788 148 B1**
(45) Veröffentlichungstag und Bekanntmachung des Hinweises auf die Patenterteilung: **29.12.2010**
(21) Anmeldenummer: 06023812.8
(22) Anmeldetag: 16.11.2006
(51) Int. Cl.: D06N 7/00, D06N 3/00, B32B 5/26, H01F 41/16, E04F 13/08

(54) **Wand- oder Flächenbekleidung**
Surface- or wall-covering
Revêtement de paroi ou de surface

(30) Priorität: 22.11.2005 DE 202005018324 U
(43) Veröffentlichungstag der Anmeldung: 23.05.2007
(73) Patentinhaber: Vitrulan Textilglas GmbH, 95509 Marktschorgast (DE)
(72) Erfinder: Zapf, Gunnar, 95326 Kulmbach (DE); Gebhardt, Michael, 95448 Bayreuth (DE)
(74) Vertreter: Blaumeier, Jörg

(56) Entgegenhaltungen:
- WO-A-2006/103436
- WO-A1-00/76700
- DE-U1- 29 620 497
- DE-U1- 29 718 222
- US-B1- 6 881 450

## Beschreibung

Die Erfindung betrifft eine Wand- oder Flächenbekleidung mit einer als Armierung dienenden, ein Gewebe und/oder ein Faservlies aufweisenden Trägerschicht, auf der eine aus einer Mischung aus einem paramagnetischen Material und einem Haftmittel bestehende Beschichtung aufgebracht ist.

Eine derartige Wand- oder Flächenbekleidung ist aus der WO 00/76700 A1 bekannt.

Zur optisch ansprechenden Gestaltung von Innenwänden wird häufig ein Gewebe oder Vlies auf die Wand aufgebracht, welches zur Erhöhung der Strapazierfähigkeit mit einer Farbbeschichtung versehen werden kann. Diese dekorativen Wandbekleidungen sind meistens aus Glasfasergewebe bzw. Faservlies gefertigt. Sie werden häufig in Fluren, Treppenhäusem oder anderen Orten mit stark beanspruchter Wand, wie Räumen für Schulungszwecke, angebracht, da sie besonders widerstandsfähig sind und eine lange Haltbarkeit aufweisen.

In Büros, Planungs- und Besprechungsräumen, Schulen, Tagungsräumen usw. werden häufig Pinnwände verwendet, die aus einem paramagnetischen Material bestehen, an dem Permanentmagnete haften, unter denen dann beispielsweise Notizen festgeklemmt werden können.

Wird seitens des Kunden eine individuelle Ausgestaltung der Wände bzw. Flächen gefordert, so ist diese Forderung mit einer Standard-Pinnwand meist nicht realisierbar, da diese in den entsprechenden Farben und Oberflächenstrukturen nicht verfügbar sind. Daher wurde bereits vorgeschlagen, auf der Wand Metallplatten zu montieren und diese anschließend mit der Wandbekleidung zu überkleben. Nachteilig ist dabei jedoch, dass zwei Arbeitsgänge zur Verkleidung der Wand erforderlich sind, sowie dass es zu Haftungsproblemen auf den Metallplatten kommen kann. Durch die unterschiedlichen Ausdehnungskoeffizienten beider Materialien kann der meist verwendete Dispersionskleber keinen ausreichenden Verbund zur Oberfläche herstellen, wodurch es zur Blasenbildung kommen kann.

Der vorliegenden Erfindung liegt daher die Aufgabe zugrunde, eine Wandbekleidung so auszugestalten, dass sie die geforderten magnetischen Eigenschaften aufweist und trotzdem eine einfache Verarbeitung ermöglicht.

Zur Lösung dieser Aufgabe ist bei einer Wand- oder Flächenbekleidung der eingangs genannten Art erfindungsgemäß vorgesehen, dass das Gewebe und/oder das Faservlies aus Glasfasern besteht und das paramagnetische Material ein pulverförmiges Metalloxid und das Haftmittel ein Polymer mit einem Schmelzpunkt zwischen 70 °C und 90 °C ist.

Die dekorative Trägerschicht ist entweder ein Dekogewebe oder ein Dekovlies, die Trägerschicht besteht aus armierenden und hoch strapazierfähigen Glasfasern.

Damit ist es gelungen, die magnetisch wirksame Komponente einer solchen als Arbeits- oder Spielfläche nutzbaren Wandbekleidung unmittelbar mit einem dekorativen Gewebe oder Faservlies zu verbinden. Anschließend kann die erfindungsgemäße Wandbekleidung an der Wand aufgebracht werden. Das umständliche Befestigen von Metallplatten, auf denen es zu Haftungsproblemen kommen kann, entfällt vorteilhafterweise.

Die Beschichtung ist so ausgestaltet, dass handelsübliche Büro- und Organisationsmagnete ausreichend haften können. Hierbei ist es auch möglich, die Wandbekleidung durch Aufbringen von Farbe auf die Sichtseite optisch beliebig zu gestalten. Die vorliegende Erfindung stellt also eine vorteilhafte Verbindung einer dekorativen, vielseitigen und strapazierfähigen Wandbekleidung mit einer paramagnetischen Schicht zur Verfügung, die wie eine Pinnwand genutzt werden kann.

In besonders vorteilhafter Ausgestaltung der Erfindung kann das Haftmittel ein Haftkleber auf Kunststoffbasis sein. Als ideale Haftkleber haben sich Polymere mit einem Schmelzpunkt zwischen 70 °C und 90 °C, herausgestellt. Dies erleichtert den Auftrag der Magnetschicht beispielsweise in einem Pulverstreuverfahren. Da ein Haftmittel auf Kunststoffbasis verwendet wird, sind Partikel des paramagnetischen Materials in eine weiche Kunststoffmasse eingebettet. Die Wandbekleidung bleibt somit auch bei einer sehr hohen Konzentration des paramagnetischen Materials in der Mischung hinreichend flexibel und biegsam. Vorteilhafterweise ist die Wandbekleidung somit leicht zu verarbeiten. Die bislang verwendeten Metallfolien oder Metallplatten weisen diesen Vorteil nicht auf.

Der Anteil des Haftmittels an der Mischung kann zwischen 5 und 40 Gewichtsprozent betragen. In diesem Bereich ist sowohl gesichert, dass eine gute Haftung an der Trägerschicht vorliegt, als auch dass eine hinreichende magnetische Wirkung erzielt wird.

Die Flächendichte des paramagnetischen Materials kann 500 bis 1.500 g/m² betragen. Damit ist eine ausreichende Haftung handelsüblicher Büro- und Organisationsmagnete sichergestellt.

Als besonders geeignetes und in Pulverform einfach zu verarbeitendes paramagnetisches Material wird ein pulverförmiges Metalloxid verwendet.

In einer Weiterbildung des Erfindungsgedankens kann vorgesehen sein, dass auf der Beschichtung ein der Trägerschicht gegenüberliegendes Vlies aufgebracht ist. Diese dünne Vliesschicht, die im Einbauzustand wandseitig anliegt, verhindert, dass sich beim Zuschneiden bzw. bei der Verlegung einzelne Metallpartikel aus dem Verbund herauslösen können. Zusätzlich verbessert die mikroporöse Struktur des Vlieses die Haftung auf dem Untergrund. Dabei kann die Flächendichte des Vlieses 10 bis 50 g/m² betragen.

Daneben betrifft die Erfindung ein Verfahren zur Herstellung einer Wand- oder Flächenbekleidung mit den Merkmalen des Anspruchs 8.

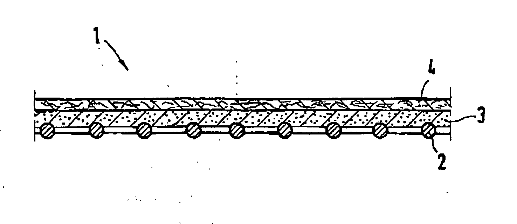

Weitere Vorteile und Einzelheiten der Erfindung ergeben sich aus dem im Folgenden beschriebenen Ausführungsbeispiel sowie anhand der Zeichnung.

Die Figur zeigt einen Querschnitt durch eine erfindungsgemäße Wandbekleidung.

Die Figur zeigt einen schematischen, nicht maßstabsgetreuen Querschnitt durch eine erfindungsgemäße Wandbekleidung 1. Im Einbauzustand nach außen hin, also sichtseitig, ist dabei ein dekoratives Glasfasergewebe 2 vorgesehen. Bei anderen Ausführungen kann alternativ ein Faservlies verwendet werden. Wandseitig folgt diesem eine mit dem Glasfasergewebe 2 durch ein Haftmittel, einen Kleber auf Kunststoffbasis, fest verbundene Beschichtung 3. Die Beschichtung 3 besteht aus einer Mischung aus einem paramagnetischen Material, im Ausführungsbeispiel einem Metalloxid, und dem Haftmittel auf Kunststoffbasis. Der Anteil des Haftmittels an der Mischung beträgt 20 Gewichtsprozent. Wandseitig wird die Wandbekleidung durch ein dünnes Glasvlies 4 abgeschlossen, das das Herauslösen von Partikeln aus der Mischung verhindert und die Haftung an der Wand oder Unterlage, die mit Hilfe von Dispersionskleber erreicht werden kann, begünstigt.

Eine Möglichkeit zur Herstellung der erfindungsgemäßen Wandbekleidung ist die folgende. Ein Faservlies oder Gewebe wird als Trägerschicht über ein Band einer Pulverstreueinrichtung zugeführt, in der die vorgefertigte Mischung in Pulverform enthalten ist. Die Mischungspartikel werden dabei in einem Pulverstreuverfahren auf das Gewebe oder Vlies aufgebracht. Danach werden die beiden Schichten, gegebenenfalls unter Erhitzen, verpresst. Da das verwendete Haftmittel auf Kunststoffbasis einen niedrigen Schmelzpunkt besitzt, schmilzt es während dieses Vorganges, sodass die Verbindung zwischen dem Gewebe oder Vlies und der Mischung gebildet wird und gleichzeitig die Partikel des paramagnetischen Materials in die Kunststoffmasse eingebettet werden. Abschließend kann bei Bedarf ein Vlies auf die Beschichtung aufgebracht werden.

Die Montage der Wandbekleidung erfolgt wie nachstehend beschrieben. Die Wandbekleidung wird mit einem Dispersionskleber permanent auf der Wand bzw. einem anderen Untergrund verklebt. Der Dispersionskleber haftet dabei an der Beschichtung bzw. dem dünnen Vlies sehr gut. Die Kanten der einzelnen Bahnen der Wandbekleidung werden dabei bündig auf Stoß gesetzt, sodass sich eine homogene Gesamtfläche ergibt. Nach dem Abtrocknen des Dispersionsklebers wird die Wandbekleidung noch zusätzlich mit einer hochwertigen Dispersions- oder Latexfarbe beschichtet.

## Patentansprüche

1. Wand- oder Flächenbekleidung (1) mit einer als Armierung dienenden, ein Gewebe und/oder ein Faservlies aufweisenden Trägerschicht, auf der eine aus einer Mischung aus einem paramagnetischen Material und einem Haftmittel bestehende Beschichtung (3) aufgebracht ist, **dadurch gekennzeichnet, dass** das Gewebe und/oder das Faservlies aus Glasfasern besteht und das paramagnetische Material ein pulverförmiges Metalloxid und das Haftmittel ein Polymer mit einem Schmelzpunkt zwischen 70 °C und 90 °C ist.

2. Wand- oder Flächenbekleidung nach Anspruch 1, **dadurch gekennzeichnet, dass** sie als Dekogewebe oder Dekovlies ausgebildet ist.

3. Wand- oder Flächenbekleidung nach Anspruch 1 oder 2, **dadurch gekennzeichnet, dass** das Haftmittel ein Haftkleber auf Kunststoffbasis ist.

4. Wand- oder Flächenbekleidung nach einem der vorangehenden Ansprüche, **dadurch gekennzeichnet, dass** der Anteil des Haftmittels an der Mischung zwischen 5 und 40 Gewichtsprozent beträgt.

5. Wand- oder Flächenbekleidung nach einem der vorangehenden Ansprüche, **dadurch gekennzeichnet, dass** die Flächendichte des paramagnetischen Materials 500 bis 1.500 g/m² beträgt

6. Wand- oder Flächenbekleidung nach einem der vorangehenden Ansprüche, **dadurch gekennzeichnet, dass** auf der Beschichtung (3) ein der Trägerschicht gegenüberliegendes Vlies (4) aufgebracht ist.

7. Wand- oder Flächenbekleidung nach Anspruch 6, **dadurch gekennzeichnet, dass** das Vlies (4) eine Flächendichte von 10 bis 50 g/m² aufweist.

8. Verfahren zur Herstellung einer Wand- oder Flächenbekleidung (1) mit einer als Armierung dienenden, ein Gewebe und/oder ein Faservlies aufweisenden Trägerschicht, auf der eine aus einer Mischung aus einem paramagnetischen Material und einem Haftmittel bestehende Beschichtung (3) aufgebracht wird, mit den folgenden Schritten:
- Mischen eines pulverförmigen Metalloxids als paramagnetisches Material mit dem Haftmittel, wobei als Haftmittel ein Polymer mit einem Schmelzpunkt zwischen 70 °C und 90 °C verwendet wird,
- Aufbringen der Mischung auf das aus Glasfasern bestehende Gewebe oder Faservlies in einem Pulverstreuverfahren, und
- Verpressen der Mischung mit dem Gewebe oder Faservlies unter Wärmezufuhr.

9. Verfahren nach Anspruch 8, **dadurch gekennzeichnet, dass** ein paramagnetisches Material mit einer Flächendichte von 500 bis 1.500 g/m² verwendet wird.

10. Verfahren nach Anspruch 8 oder 9, **dadurch gekennzeichnet, dass** das paramagnetische Material derart mit dem Haftmittel gemischt wird, dass der Anteil des Haftmittels an der Mischung zwischen 5 und 40 Gewichtsprozent beträgt.

## Claims

1. A wall or surface covering (1) with a carrier layer acting as a reinforcement and providing a woven fabric and/or a fibre fleece on which a coating (3) comprising a mixture of a paramagnetic material and an adhesive agent is applied,
**characterised in that**
the woven fabric and/or the fibre fleece comprises glass fibres, the paramagnetic material is a metallic oxide and the adhesive agent is a polymer with a melting point between 70°C and 90°C.

2. The wall or surface covering according to claim 1,
**characterised in that**
it is designed as a decorative woven fabric or a decorative fleece.

3. The wall or surface covering according to claim 1 or 2,
**characterised in that**
the adhesive agent is a glue based on a synthetic material.

4. The wall or surface covering according to any one of the preceding claims,
**characterised in that**
the proportion of the adhesive agent in the mixture is between 5 and 40 per cent by weight.

5. The wall or surface covering according to any one of the preceding claims,
**characterised in that**
the density by area of the paramagnetic material is 500 to 1500 g/m².

6. The wall or surface covering according to any one of the preceding claims,
**characterised in that**
a fleece (4) disposed opposite to the carrier layer is applied on the coating (3).

7. The wall or surface covering according to claim 6,
**characterised in that**
the fleece (4) provides a density by area of 10 to 50 g/m².

8. A method for manufacturing a wall or surface covering (1) with a carrier layer acting as a reinforcement and providing a woven fabric and/or a fibre fleece on which a coating (3) comprising a mixture of a paramagnetic material and an adhesive agent is applied, with the following steps:
- mixing of a powdered metallic oxide as the paramagnetic material with the adhesive agent, wherein a polymer with a melting point between 70°C and 90°C is used as the adhesive,
- application of the mixture to the woven fabric or fibre fleece comprising glass fibres within a powder dispersion method, and
- compression of the mixture with the woven fabric or fibre fleece subject to a supply of heat.

9. The method according to claim 8,
**characterised in that**
a paramagnetic material with a density by area from 500 to 1500 g/m² is used.

10. The method according to claim 8 or 9,
**characterised in that**
the paramagnetic material is mixed with the adhesive agent in such a manner that the proportion of the adhesive in the mixture is between 5 and 40 per cent by weight.

## Revendications

1. Recouvrement de mur ou de surface (1) comprenant une couche support servant d'armure, présentant un tissu et/ou un non-tissé fibreux, sur laquelle est appliqué un revêtement (3) constitué d'un mélange à base d'un matériau paramagnétique et d'un agent adhésif, **caractérisé en ce que** le tissu et/ou le non-tissé est/sont à base de fibres de verre et le matériau paramagnétique est un oxyde de métal pulvérulent et l'agent adhésif un polymère avec un point de fusion compris entre 70°C et 90°C.

2. Recouvrement de mur ou de surface selon la revendication 1, **caractérisé en ce qu'**il est conçu sous forme de tissu de décoration ou de non-tissé de décoration.

3. Recouvrement de mur ou de surface selon la revendication 1 ou 2, **caractérisé en ce que** l'agent adhésif est une colle autoadhésive à base de plastique.

4. Recouvrement de mur ou de surface selon l'une quelconque des revendications précédentes, **caractérisé en ce que** la fraction de l'agent adhésif dans le mélange se situe entre 5 et 40 %.

5. Recouvrement de mur ou de surface selon l'une quelconque des revendications précédentes, **caractérisé en ce que** la densité de surface du matériau paramagnétique se situe entre 500 et 1500g/m².

6. Recouvrement de mur ou de surface selon l'une quelconque des revendications précédentes, **caractérisé en ce qu'**un non-tissé (4) opposé à la couche support est appliquée sur le revêtement (3).

7. Recouvrement de mur ou de surface selon la revendication 6, **caractérisé en ce que** le non-tissé (4) présente une densité de surface allant de 10 à 50 g/m².

8. Procédé pour fabriquer un recouvrement de mur ou de surface (1) comprenant une couche support servant d'armure, présentant un tissu et/ou un non-tissé fibreux, sur laquelle 5 est appliqué un revêtement (3) constitué d'un mélange à base d'un matériau paramagnétique et d'un agent adhésif, comprenant les étapes suivantes :
- mélange d'un oxyde de métal pulvérulent sous forme de matériau paramagnétique avec l'agent adhésif, un polymère avec un point de fusion compris entre 70°C et 90°C étant utilisé comme agent adhésif, et
- application du mélange sur le tissu ou le non-tissu fibreux à base de fibres de verre dans un procédé de pulvérisation de poudre, et
- compression du mélange avec le tissu ou le non-tissé avec apport de chaleur.

9. Procédé selon la revendication 8, **caractérisé en ce qu'**un matériau paramagnétique avec une densité de surface de 500 à 1500 g/m² est utilisé.

10. Procédé selon la revendication 8 ou 9, **caractérisé en ce que** le matériau paramagnétique est mélangé avec l'agent adhésif de telle sorte que la fraction de l'agent adhésif dans le mélange se situe entre 5 et 40 % en poids.
